# FASCICULE DE BREVET EUROPEEN

(11) **EP 3 210 807 B1**
(45) Date de publication et mention de la délivrance du brevet: **05.10.2022**
(21) Numéro de dépôt: 17156269.7
(22) Date de dépôt: 15.02.2017
(51) Int. Cl.: B60H 1/32

(54) **PROCÉDÉ DE RÉGULATION DU FONCTIONNEMENT D'UN COMPRESSEUR ÉQUIPANT UNE INSTALLATION DE CONDITIONNEMENT D'AIR D'UN VÉHICULE AUTOMOBILE**
REGULIERUNGSVERFAHREN DER FUNKTIONSWEISE EINES KOMPRESSORS, DER IN EINE KLIMAANLAGE EINES KRAFTFAHRZEUGS EINGEBAUT IST
METHOD FOR CONTROLLING THE OPERATION OF A COMPRESSOR PROVIDED IN AN AIR-CONDITIONING SYSTEM OF A MOTOR VEHICLE

(30) Priorité: 24.02.2016 FR 1600314
(43) Date de publication de la demande: 30.08.2017
(73) Titulaire: Valeo Japan Co., Ltd., Saitama 360-0193 (JP)
(72) Inventeur: KHANCHOUL, Mohamed, 92160 ANTONY (FR)
(74) Mandataire: Valeo Systèmes Thermiques

(56) Documents cités:
- DE-A1-102010 027 141
- US-A1- 2004 172 960

## Description

La présente invention est du domaine des installations de ventilation, de chauffage et/ou de climatisation équipant les véhicules automobiles. La présente invention relève plus spécifiquement des modalités de régulation du fonctionnement d'un compresseur que comportent de telles installations.

Les véhicules automobiles sont couramment équipés d'une installation de ventilation, de chauffage et/ou de climatisation, dite aussi installation de conditionnement d'air. Une telle installation est notamment dédiée au traitement de l'air contenu dans l'habitacle du véhicule, pour son renouvellement et/ou pour son chauffage ou inversement pour son refroidissement en fonction du confort souhaité par les passagers.

A cet effet, l'installation comprend typiquement un circuit fermé de climatisation à travers lequel circule un fluide réfrigérant. Successivement suivant le sens de circulation du fluide à son travers, le circuit de climatisation comprend essentiellement un compresseur, un condenseur, un détendeur et un évaporateur. Le fluide est ainsi comprimé à haute pression en phase gazeuse par le compresseur, transformé en phase liquide dans le condenseur, détendu à basse pression par le détendeur puis transformé en phase gazeuse dans l'évaporateur et à nouveau acheminé à basse pression vers le compresseur.

Dans un circuit de climatisation classique, le compresseur est entraîné par le moteur propulsif du véhicule. Pour rompre la dépendance entre le régime de fonctionnement du compresseur et le régime de fonctionnement du moteur propulsif du véhicule, il est connu d'utiliser un compresseur dont l'entraînement est procuré par un moteur électrique.

Le moteur électrique est alors alimenté en énergie par une réserve d'énergie électrique équipant le véhicule, comprenant notamment une ou plusieurs batteries. Le fonctionnement de l'installation, et donc entre autre le fonctionnement du moteur électrique entraînant le compresseur, est régulé par un module de commande selon essentiellement les conditions climatiques et/ou le confort souhaité par les passagers.

En outre, le compresseur est équipé d'un module de contrôle régulant son fonctionnement en fonction des ordres de commande générés par le module de commande. Le module de contrôle intègre aussi un dispositif de sécurité opérant une surveillance automatisée du fonctionnement du compresseur. Le dispositif de sécurité conditionne le fonctionnement sécurisé du compresseur en interdisant notamment une exploitation excessive du moteur susceptible de le détériorer.

Par ailleurs, une unité de gestion équipant le véhicule contrôle et régule le fonctionnement des divers équipements et/ou accessoires du véhicule pour maintenir son fonctionnement sécurisé. Dans ce contexte, les mises en œuvre des équipements de l'installation de conditionnement d'air, dont le compresseur, sont en outre placées sous la dépendance de l'unité de gestion.

Parmi les critères de régulation du fonctionnement des équipements électriques par l'unité de gestion, il est pris en compte les ressources en énergie électrique de la réserve d'énergie électrique. En cas d'une réduction conséquente de l'énergie fournie par la réserve d'énergie électrique, l'unité de gestion commande alors une réduction de la consommation en énergie électrique d'un ou de plusieurs équipements du véhicule. Les ressources en énergie électrique de la réserve d'énergie électrique sont ainsi préservées dans l'attente de son rechargement.

Ainsi, le fonctionnement d'un compresseur d'une installation de conditionnement d'air équipant un véhicule automobile, est régulé par divers organes de contrôle/commande comprenant notamment :
-) le module de commande régulant le fonctionnement des équipements de l'installation de conditionnement d'air, dont le compresseur. Une telle régulation est opérée par le module de commande au moins selon divers critères de confort, prenant notamment en compte les conditions climatiques et/ou le confort ambiant de l'habitacle souhaité par les passagers.
-) l'unité de gestion régulant le fonctionnement des équipements du véhicule, dont le compresseur de l'installation de conditionnement d'air. Une telle régulation est opérée par l'unité de gestion au moins selon divers critères de sécurisation du fonctionnement du véhicule, dont la tension et/ou du courant fourni par la réserve d'énergie électrique du véhicule révélatrice de son état d'épuisement.
-) le module de contrôle équipant le compresseur pour réguler son fonctionnement en fonction des ordres de commande et pour interdire une exploitation excessive du compresseur en autorisant notamment sa mise en œuvre sous conditions sécurisées au regard d'un effort maximal admis supporté par le moteur.

Il se pose dès lors le problème de procurer une régulation satisfaisante du fonctionnement du compresseur de l'installation de conditionnement d'air, lorsque la réserve d'énergie électrique du véhicule est placée en situation d'épuisement. Dans ce cas, la tension électrique du courant fourni par la réserve d'énergie électrique est significativement inférieure par rapport à une tension nominale prédéfinie.

L'unité de gestion génère alors une consigne initiale de régulation du fonctionnement du moteur d'entraînement du compresseur, en prenant notamment en compte un seuil nominal de tension et/ou du courant fourni par la réserve d'énergie électrique. En cas d'une baisse de tension et/ou du courant électrique fourni par la réserve d'énergie inférieure au seuil nominal de tension, la vitesse d'entraînement du compresseur par le moteur est alors réduite pour limiter sa consommation en énergie électrique.

Cependant pour éviter une mise en surcharge du compresseur, il est aussi à cet effet connu d'exploiter un moyen de commande intégré au module de contrôle pour corriger la consigne initiale émise par l'unité de gestion. Le moyen de commande est alors générateur d'une consigne corrigée issue d'une correction de la consigne initiale par le moyen de commande pour procurer un entraînement du compresseur à une vitesse évitant sa mise en état de surcharge.

Le document DE 10 2010 027 141 A1 divulgue une procédure connue de contrôle d'un compresseur.

Par exemple le document JP 2014 167 378 (DENSO CORP.) décrit de telles modalités de régulation du fonctionnement d'un compresseur d'une installation de conditionnement d'air d'un véhicule automobile. En cas d'un affaiblissement de la tension et/ou du courant électrique fourni par la réserve d'énergie électrique du véhicule, une unité de gestion génère une consigne initiale pour réduire la consommation électrique du moteur électrique entraînant le compresseur. Un moyen de commande identifie un éventuel état de surcharge du compresseur et dans ce cas adapte la vitesse du moteur pour maintenir le compresseur hors d'état de surcharge.

Plus particulièrement selon JP 2014 167 378, une vitesse maximale d'entraînement du compresseur est déduite à partir de la consommation courante en énergie électrique du moteur et d'une consommation autorisée en énergie électrique par le moteur identifiée par la consigne initiale générée par l'unité de gestion. Le moyen de commande identifie un éventuel état de surcharge du compresseur à partir de la vitesse courante du moteur et du courant électrique mesuré aux bornes du moteur. En cas d'identification par le moyen de commande d'un état de surcharge du compresseur, le moyen de commande génère une consigne corrigée augmentant la vitesse du moteur dans la limite imposée par la consigne initiale pour placer le compresseur hors d'état de surcharge.

Il est constaté que de telles modalités de régulation du fonctionnement du compresseur, en cas de baisse significative des ressources de la réserve d'énergie électrique, méritent d'être améliorées. Plus particulièrement, de telles modalités de régulation sont susceptibles de perturber significativement un fonctionnement adapté de l'installation de conditionnement d'air pour maintenir le confort souhaité par les passagers.

Il est aussi à relever que l'installation de conditionnement d'air procure non seulement un confort ambiant pour les passagers, mais aussi procure une conduite sécurisée du véhicule. En effet, l'installation de conditionnement d'air permet d'éviter la formation de buée sur les vitres du véhicule et permet d'éviter de placer le conducteur en situation de danger.

Il est donc opportun de maintenir un fonctionnement de l'installation de conditionnement d'air au plus proche des ordres de commande générés par le module de commande, et cela y compris en cas de baisse significative de la tension ou du courant fourni par la réserve d'énergie.

Dans ce contexte, la présente invention a pour objet un procédé de régulation de la vitesse d'un moteur électrique d'entraînement d'un compresseur équipant une installation de conditionnement d'air d'un véhicule automobile. Le procédé de régulation de la présente invention est plus spécifiquement dédié à la régulation de la vitesse dudit moteur en cas de baisse significative de la tension ou du courant fourni par une réserve d'énergie électrique du véhicule à partir de laquelle le moteur est alimenté en énergie.

La démarche de la présente invention est fondée sur le constat que dans le cas d'une baisse significative de la tension et/ou du courant fourni par la réserve d'énergie électrique du véhicule, il est typiquement opéré une réduction de la consommation en énergie électrique du moteur entraînant le compresseur, sous conditions d'un fonctionnement du compresseur hors d'état de surcharge. Dans ce contexte, il est habituellement négligé la possibilité de maintenir au mieux un fonctionnement optimisé de l'installation de conditionnement d'air conforme aux ordres de commande générés par le module de commande.

Le but principal de la présente invention est d'obvier à cet inconvénient.

Toujours selon la démarche menée par la présente invention, il est notamment constaté qu'une augmentation de la vitesse d'entraînement du compresseur reste limitée par le module de contrôle au regard de la charge maximale admise par le moteur. Or, si une chute de tension et/ou du courant fourni par la réserve d'énergie intervient au moment où le compresseur est entraîné à une vitesse proche de celle maximale autorisée par le module de contrôle, le fonctionnement de l'installation de conditionnement d'air ne peut pas être obtenu conformément aux ordres de commande générés par le module de commande.

En outre, il est aussi constaté que l'augmentation de la vitesse du moteur par le moyen de commande est habituellement appliquée conformément à une consigne corrigée de valeur constante pour une consigne initiale donnée transmise par l'unité de gestion. Une évolution du fonctionnement de l'installation de conditionnement d'air sous contrôle du module de commande est alors interdite dans le cadre du maintien à valeur constante d'une consigne initiale donnée par l'unité de gestion.

Il est aussi à relever qu'une augmentation significative de la vitesse d'entraînement du compresseur augmente rapidement la charge supportée par le compresseur et est génératrice de nuisance sonores pour les passagers du véhicule. Il est souhaitable de limiter de telles nuisances sonores, notamment au regard de leur intensité pour une fréquence d'émission donnée.

Sur la base de ces constats, il est plus spécifiquement recherché par la présente invention de résoudre ces inconvénients.

A cet effet, il est globalement proposé par la présente invention, à la suite de la génération par l'unité de gestion d'une consigne initiale donnée, de prendre en compte une plage de vitesses d'entraînement du moteur pour faire varier la consigne corrigée générée par le moyen de commande en fonction des ordres de commande générés par le module de commande.

Ladite plage de vitesses est notamment comprise entre une limite de vitesse maximale imposée par la consigne initiale générée par l'unité de gestion et par un maintien du fonctionnement du compresseur hors d'état de surcharge. Ainsi, la plage de vitesses est comprise entre un seuil maximal de vitesse au plus égal à une vitesse imposée par la consigne initiale et un seuil minimal de vitesse conforme à un maintien du compresseur hors d'état de surcharge.

Ainsi pour une consigne initiale donnée, la valeur de la consigne corrigée est apte à varier non seulement en fonction de l'état de surcharge ou non du compresseur, mais aussi en fonction de l'évolution des ordres de commande générés par le module de commande. Il en résulte que l'installation est apte à maintenir un traitement de l'air de l'habitacle du véhicule au mieux conforme aux ordres de commande générés par le module de commande, et cela y compris en cas d'une baisse de tension et/ou du courant fourni par la réserve d'énergie électrique qui se traduit par une génération par l'unité de gestion de la consigne initiale.

Plus spécifiquement, suite de la génération de la consigne initiale par l'unité de gestion, le moyen de commande génère alors une première consigne corrigée réduisant la vitesse du moteur au seuil minimal de vitesse. Puis, le moyen de commande génère itérativement une deuxième consigne corrigée variant, dans la limite imposée par le seuil maximal de vitesse, selon les ordres de commande transmis au moyen de commande par le module de commande.

On relèvera dès à présent qu'il est avantageusement proposé d'appliquer une variation de la vitesse du moteur conformément à la consigne corrigée, selon une règle de calcul tenant compte de la tension et/ou du courant fourni par la réserve d'énergie pondérée par un coefficient de calcul.

A cet effet, le moyen de commande peut par exemple disposer directement d'une mesure de la tension et/ou du courant fourni par la réserve d'énergie aux bornes d'alimentation en énergie électrique du moteur. La tension et/ou du courant fourni par la réserve d'énergie est aussi susceptible d'être déduite par le moyen de commande à partir de la consigne initiale transmise par l'unité de gestion.

Le coefficient de calcul est alors appliqué à la valeur de la tension et/ou du courant fourni par la réserve d'énergie. Le coefficient de calcul est préférentiellement un coefficient proportionnel déduit à partir d'au moins un paramètre identifiant le rendement du compresseur. Par exemple, le rendement du compresseur peut être typiquement identifié à partir de la pression du fluide admis à l'intérieur du compresseur par aspiration et/ou à partir de la pression du fluide évacuée hors du compresseur par refoulement.

Lors d'une détection d'une tension ou d'un courant insuffisant fourni par la réserve d'énergie, l'unité de gestion génère la consigne initiale transmise au module de contrôle pour définir une vitesse maximale autorisée du moteur. Le moyen de commande génère alors une première consigne corrigée réduisant la vitesse du moteur d'entraînement du compresseur à une vitesse comprise dans la plage de vitesses, en évitant un état surcharge du compresseur. La première consigne corrigée est de préférence égale, voire supérieure, au seuil minimal de vitesse.

Puis avantageusement, le moyen de commande génère par calcul itératif une deuxième consigne corrigée comprise dans la plage de vitesses, en fonction des ordres de commande générés par le module de commande.

Il en ressort que le compresseur est alors entraîné à vitesse variable continuellement dans la plage de vitesses pour une consigne initiale donnée, selon les besoins de traitement de l'air de l'habitacle définis par le module de commande. La variation de la vitesse d'entraînement du compresseur est opérée sans risque de placer le compresseur en état de surcharge et tout en respectant la consigne initiale générée par l'unité de gestion. Outre l'avantage procuré de maintenir une exploitation de l'installation de conditionnement d'air conforme aux ordres de commande, y compris sous dépendance de la consigne initiale, les inconvénients précédemment mentionnés sont évités.

Plus particulièrement, le seuil maximal de vitesse est défini en fonction de la consigne initiale et en fonction d'un maintien sécurisé du fonctionnement du moteur par un dispositif de sécurité intégré au module de contrôle. Selon les modalités mises en œuvre par la présente invention, il est ainsi évité par le moyen de commande un arrêt du moteur par le dispositif de sécurité consécutif d'une exploitation excessive du moteur. En effet, le seuil maximal de vitesse est avantageusement restreint par le moyen de commande de manière strictement inférieure à une vitesse d'entraînement du moteur pouvant le placer en situation d'exploitation excessive et pouvant provoquer son arrêt par le module de contrôle.

Plus particulièrement encore, les variations de vitesse d'entraînement du compresseur opérées sous dépendance des ordres de commande sont de faibles amplitudes en étant régulées progressivement en continu. Ceci est le résultat du calcul itératif avantageusement opéré par le moyen de commande pour générer la deuxième consigne corrigée. Ainsi, les nuisances sonores susceptibles d'être produites par de telles variations de vitesses de faibles amplitudes ne sont pas source d'un inconfort sonore pour les passagers.

En d'autres termes et selon une approche générale de la présente invention, le procédé proposé est un procédé de régulation de la vitesse d'un moteur électrique d'entraînement d'un compresseur. Le dit compresseur est un équipement d'un circuit de climatisation acheminant un fluide réfrigérant et participant d'une installation de conditionnement d'air d'un véhicule automobile. Le moteur d'entraînement du compresseur est alimenté en énergie électrique par une réserve d'énergie électrique du véhicule, dont l'exploitation est régulée par une unité de gestion du fonctionnement du véhicule.

La mise en œuvre du moteur est régulée au moins en fonction d'ordres de commande générés par un module de commande. Les ordres de commande sont notamment générés selon au moins les besoins de traitement de l'air de l'habitacle du véhicule, voire par exemple encore selon les besoins en traitement thermique de tout autre organe du véhicule exploitant à cet effet l'installation de conditionnement d'air. A cet effet, il est subsidiairement précisé que la vitesse du moteur est typiquement régulée par un module de contrôle équipant le compresseur à partir de consignes de fonctionnement issues au moins des ordres de commande, voire aussi le cas échéant, d'une consigne initiale générée par l'unité de gestion.

Par ailleurs, il est aussi subsidiairement précisé que le module de contrôle comprend un dispositif de sécurité interdisant une exploitation excessive du moteur au regard d'une charge maximale admise, en provoquant son arrêt pour éviter sa détérioration en cas d'une telle exploitation excessive.

Le procédé comprend une opération de surveillance par l'unité de gestion de la tension et/ou du courant fourni par la réserve d'énergie électrique au regard d'un seuil nominal de tension et/ou de courant. En cas de détection par l'unité de gestion d'une baisse de tension et/ou du courant fourni par la réserve d'énergie électrique, l'unité de gestion génère alors une consigne initiale relative à une consommation autorisée d'énergie électrique par le moteur. Pour rappel, il est encore subsidiairement précisé qu'une vitesse maximale autorisée du moteur est déduite par le module de contrôle à partir de la consigne initiale.

Le procédé comprend aussi une opération de surveillance par un moyen de commande d'un état de surcharge du compresseur. Un tel moyen de commande est de préférence intégré au module de contrôle équipant le compresseur. En cas de surcharge du compresseur, le moyen de commande génère au moins une consigne corrigée relative à une vitesse du moteur interdisant un état de surcharge du compresseur, bien entendu sous respect de la consigne initiale et par conséquent, de la vitesse maximale autorisée qui en est déduite.

Dans ce contexte, le procédé de la présente invention est principalement reconnaissable en ce que, conformément à une consigne initiale donnée et à une interdiction d'un état de surcharge du compresseur, la consigne corrigée varie selon les ordres de commande dans une plage de vitesses.

Il est compris que pour une même consigne initiale, la consigne corrigée varie selon les ordres de commande dans la plage de vitesses. La variation de la consigne corrigée est opérée non seulement pour éviter un état de surcharge du compresseur, mais aussi pour répondre aux besoins du fonctionnement du compresseur identifiés par les ordres de commande afin de maintenir une exploitation de l'installation de conditionnement d'air au mieux conforme aux besoins du véhicule identifiés par le module de commande.

La plage de vitesses est avantageusement identifiée par le moyen de commande en étant bornée entre deux seuils de vitesses. Ces deux seuils de vitesses limitent la variation de la consigne corrigée sous dépendance des ordres de commande, entre une vitesse relative à un seuil minimal de vitesse maintenant un fonctionnement du compresseur hors état de surcharge et une vitesse relative à un seuil maximal de vitesse au plus égal à une vitesse conforme à la consigne initiale ou en d'autres termes conforme à la vitesse maximale autorisée déduite de la consigne initiale.

Tel que visé plus loin, le seuil maximal de vitesse est de préférence éventuellement rectifié par le moyen de commande en tenant compte d'une consigne de sécurité imposée par un dispositif de sécurité intégré au module de contrôle et interdisant un effort supporté par le moteur supérieur à un seuil de sécurité prédéterminé.

Ainsi plus spécifiquement, la plage de vitesses est comprise entre un seuil maximal de vitesse et un seuil minimal de vitesse. Le seuil maximal de vitesse est au plus égal à une vitesse conforme à la consigne initiale. Le seuil minimal de vitesse est conforme à un maintien du compresseur hors d'état de surcharge.

Le seuil maximal de vitesse peut être déduit par le moyen de commande à partir de la consigne initiale et/ou à partir de la vitesse maximale autorisée déduite de la consigne initiale, notamment par le module de contrôle. En effet, le moyen de commande est de préférence intégré au module de contrôle équipant le compresseur. A partir de la consigne initiale portant sur une limitation de la consommation en énergie électrique du compresseur et plus particulièrement du moteur, le moyen de commande et/ou le module de contrôle sont aptes, isolément ou en combinaison, à identifier une vitesse du moteur conforme à la consigne initiale.

Tel que précédemment visé, la mise en œuvre du moteur est en outre couramment placée sous dépendance du module de contrôle interdisant un effort du moteur supérieur à un seuil de sécurité. Dans ce contexte, le seuil maximal de vitesse est de préférence limité par le moyen de commande strictement inférieur au seuil de sécurité. Ainsi, la variation de la consigne corrigée peut être opérée conformément aux ordres de commande sans risque de provoquer une mise à l'arrêt du moteur par le module de contrôle.

La consigne corrigée est notamment appliquée par le moyen de commande par variation de la tension et/ou du courant électrique alimentant le moteur. La dite variation de tension est de préférence appliquée conformément à une règle de calcul tenant compte de la tension et/ou du courant fourni par la réserve d'énergie à laquelle il est appliqué un coefficient. La tension et/ou le courant électrique fourni par la réserve d'énergie électrique est susceptible d'être issue d'une mesure effectuée aux bornes de raccordement du moteur au réseau électrique du véhicule, par le module de contrôle et/ou plus spécifiquement par le module de commande voire encore par le dispositif de sécurité.

Le coefficient de calcul est avantageusement un coefficient proportionnel déduit par le moyen de commande à partir d'au moins un paramètre d'identification du rendement du compresseur. Un tel paramètre est par exemple identifié par comparaison entre la pression du fluide aspiré à basse pression par le compresseur et la pression du fluide refoulé à haute pression par le compresseur.

A titre indicatif selon les conditions de fonctionnement du compresseur et plus particulièrement selon la charge qu'il supporte, un tel coefficient est susceptible de faire varier entre 10% et 100% la tension et/ou le courant électrique alimentant le moteur. Il en ressort que l'application du coefficient proportionnel est particulièrement adaptée dans le cadre d'une large variation de la tension et/ou du courant alimentant en énergie électrique du moteur, conformément à l'application d'une consigne corrigée pouvant varier en continu sur une large plage de vitesses en fonction des ordres de commande.

La consigne corrigée est de préférence itérativement calculée par le moyen de commande à fréquence donnée. La consigne corrigée peut aussi être calculée par le moyen de commande suite à une détection d'une variation des ordres de commande.

Ainsi, le procédé de la présente invention comprend plus spécifiquement les opérations suivantes :
-) transmission au moyen de commande de la consigne initiale donnée générée par l'unité de gestion et identification, notamment par le moyen de commande, de la plage de vitesses,
-) transmission au moyen de commande des ordres de commande générés par le module de commande,
-) génération par le moyen de commande d'une première consigne corrigée correspondante à la plus faible valeur de la plage de vitesses, puis
-) génération itérative par le moyen de commande d'une deuxième consigne corrigée variant selon les ordres de commande dans la plage de vitesses préalablement identifiée par le moyen de commande.

Il est aussi précisé que, suivant une variation de la consigne initiale, le moyen de commande identifie une nouvelle plage de vitesses conforme à la variation de la consigne initiale et génère alors une nouvelle première consigne corrigée.

D'autres caractéristiques, détails et avantages de l'invention ressortiront plus clairement à la lecture de la description donnée ci-après en relation avec un exemple de réalisation de l'invention illustré sur les figures de la planche annexée, dans laquelle :
- la figure 1 est une illustration du contexte de la présente invention, selon lequel le fonctionnement d'un compresseur électrique d'un véhicule est régulé sous dépendance d'un module de commande,
- la figure 2 est une représentation schématique d'un procédé conforme à la présente invention, et est composée de schémas illustrant successivement des étapes (a), (b), (c) et (d) d'exécution de ce procédé,
- la figure 3 est un schéma illustrant l'évolution de la vitesse d'un moteur d'entraînement du compresseur représenté sur la figure 1, exploité selon le procédé conforme à la présente invention.
- la figure 4 est un schéma illustrant les modalités d'exécution d'une variation de vitesse d'un moteur d'entraînement du compresseur représenté sur la figure 1, conformément à l'application d'une consigne générée déterminée par la mise en œuvre d'un procédé conforme à la présente invention.

Il faut tout d'abord noter que les figures exposent la présente invention de manière détaillée et selon des modalités particulières de sa mise en œuvre, et que lesdites figures peuvent bien entendu servir le cas échéant à mieux définir la présente invention, tant dans ses particularités que dans sa généralité, notamment en relation avec la description qui vient d'en être faite.

Par ailleurs pour clarifier et rendre aisée la lecture de la description qui va être faite de la présente invention, les éléments communs illustrés sur les différentes figures sont respectivement identifiés dans les descriptions propres à ces figures avec les mêmes numéros et/ou lettres de référence, sans impliquer leur représentation individuelle sur chacune des figures.

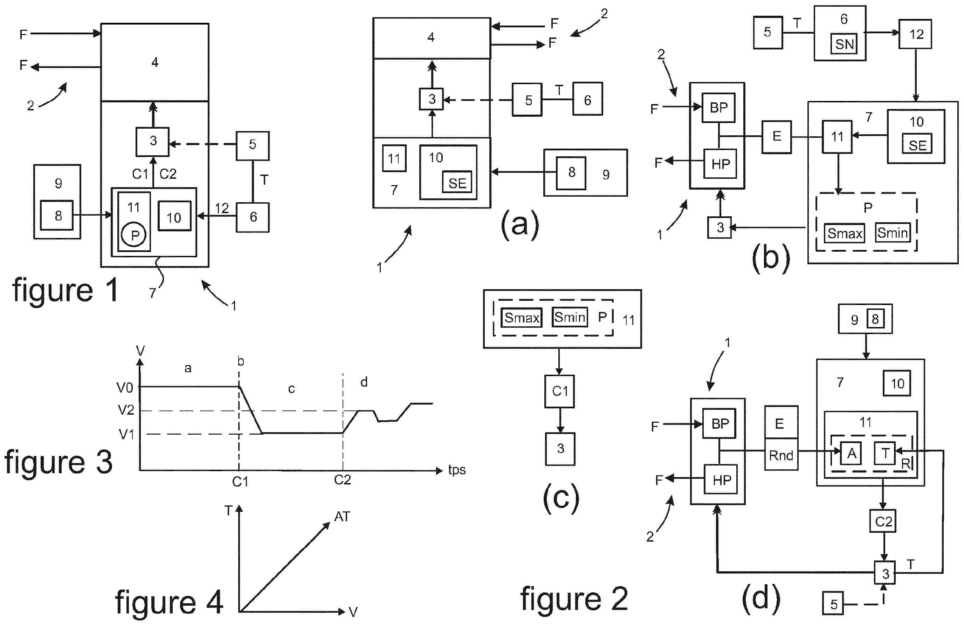

Sur la figure 1, un compresseur 1 est un composant d'un circuit de climatisation 2 d'une installation de conditionnement d'air équipant un véhicule automobile. Typiquement, le compresseur 1 aspire à basse pression un fluide F réfrigérant acheminé par le circuit de climatisation 2, comprime le fluide F et le refoule à haute pression vers le circuit de climatisation 2.

A cet effet, le compresseur 1 est équipé d'un moteur électrique 3 entraînant un moyen mécanique 4 apte à comprimer le fluide F admis à basse pression à l'intérieur du compresseur 1. Le moteur 3 est alimenté en énergie électrique depuis une réserve d'énergie 5 électrique du véhicule, comprenant une ou plusieurs batteries. Pour sécuriser le fonctionnement du véhicule, l'exploitation des ressources de la réserve d'énergie 5 électrique est contrôlée par une unité de gestion 6 du fonctionnement du véhicule. La réserve d'énergie 5 électrique alimente à la fois le moteur d'entraînement du compresseur et le moteur électrique de propulsion du véhicule, quand celui-ci en est équipé.

Le fonctionnement du compresseur 1 est typiquement régulé par un module de contrôle 7 équipant le compresseur 1, en fonction d'ordres de commande 8 générés par un module de commande 9 équipant l'installation de conditionnement d'air. Les ordres de commande 8 sont notamment générés en fonction du confort souhaité dans l'habitacle par les passagers et/ou en fonction des besoins en traitement thermique d'organes du véhicule exploitant à cet effet l'installation de conditionnement d'air.

Le module de contrôle 7 est typiquement apte à déduire une vitesse du moteur 3 à partir de consignes de fonctionnement du compresseur 1 qui lui sont transmises. De telles consignes de fonctionnement comprennent notamment les ordres de commande 8 générés par le module de commande 9 et le cas échéant une consigne initiale 12 générée par l'unité de gestion 6 en cas de baisse significative de la tension T ou du courant fourni par la réserve d'énergie 5 électrique.

Par ailleurs, le module de contrôle 7 comprend un dispositif de sécurité 10 interdisant un fonctionnement du compresseur 1 lorsque le moteur 3 est soumis à un effort supérieur à un seuil de sécurité SE prédéterminé. Plus particulièrement, en cas d'un effort supporté par le moteur supérieur au seuil de sécurité SE, le module de contrôle 7 provoque l'arrêt du moteur 3 via le dispositif de sécurité 10.

Dans le cadre de la présente invention, le module de contrôle 7 comprend aussi un moyen de commande 11 régulant la vitesse du moteur 3 en cas de baisse significative de la tension T et/ou du courant fourni par la réserve d'énergie 5 électrique. A cet effet, le module de contrôle 7 est placé sous la dépendance du module de gestion 6. En cas de baisse significative de la tension T ou du courant fourni par la réserve 5 d'énergie électrique, le module de gestion 6 génère une consigne initiale 12 pour réduire la consommation en énergie électrique du moteur 3.

La figure 2 illustre des étapes successives (a), (b), (c) et (d) de régulation du fonctionnement du moteur 3 d'entraînement du compresseur 1, conformément à l'application d'un procédé relevant de la présente invention. Selon une étape (a), la réserve d'énergie 5 électrique du véhicule fournit un courant à une tension nominale prédéterminée. L'unité de gestion 6 surveille la tension et/ou du courant de la réserve d'énergie 5 électrique pour détecter une éventuelle chute de tension ou de courant au regard de la tension ou du courant nominale de la réserve d'énergie 5 électrique. A défaut de génération de la consigne initiale 10 par l'unité de gestion 6, le fonctionnement du compresseur 1 est alors régulé conformément aux ordres de commande 8 générés par le module de commande 9. Les ordres de commande 8 sont transmis au module de contrôle 7 qui régule le fonctionnement du compresseur 1 et plus spécifiquement la vitesse du moteur 3.

Selon l'étape (b), l'unité de gestion 6 identifie au regard d'un seuil nominal SN de tension prédéfini une baisse de la tension T et/ou du courant électrique fourni par la réserve d'énergie 5 électrique. L'unité de gestion 6 génère et transmets alors au module de contrôle 7 une consigne initiale 12 limitant la consommation en énergie électrique du moteur 3. Le moyen de commande 11 déduit alors une plage de vitesses P à l'intérieur de laquelle une variation de vitesse du moteur 3 est possible par suite de l'application de la consigne initiale 12, conformément à un maintien du compresseur 1 hors d'état de surcharge E.

La plage de vitesses P est plus particulièrement bornée entre un seuil maximal de vitesse Smax et un seuil minimal de vitesse Smin. Le seuil maximal Smax de vitesse est d'une part conforme à la consigne initiale 12 et d'autre part est strictement inférieur à une vitesse du moteur 3 le plaçant dans une charge de travail proche du seuil de sécurité SE défini par le dispositif de sécurité 10. Le seuil minimal de vitesse Smin est conforme à un maintien du compresseur 1 hors état de surcharge E. Un état de surcharge E du compresseur 1 est notamment identifié par le module de contrôle 7, notamment via le moyen de commande 11, à partir de la basse pression BP du fluide F aspiré par le compresseur 1 et de la haute pression HP du fluide F refoulé par le compresseur 1.

Puis selon l'étape (c), le moyen de commande 11 génère une première consigne corrigée C1 relative à une vitesse du moteur 3 correspondante au seuil minimal de vitesse Smin. La première consigne corrigée C1 est alors appliquée par le module de contrôle 7, de préférence via le moyen de commande 11, pour abaisser la vitesse du moteur 3 conformément au seuil minimal de vitesse Smin.

Puis selon l'étape (d), le moyen de commande 11 génère une deuxième consigne corrigée C2 en fonction des ordres de commande 8 généré par le module de commande 9. Ainsi, la vitesse du moteur 3 peut varier selon les besoins de confort dans l'habitacle du véhicule et/ou selon les besoins de traitement thermique d'un ou plusieurs organes à partir d'une exploitation de l'installation de conditionnement d'air. Bien entendu, la variation de vitesse du moteur 3 opérée conformément à la deuxième consigne corrigée C2 est effectuée dans les limites imposées par la plage de vitesses P.

Ainsi en se reportant sur la figure 3, la vitesse V du moteur varie dans le temps Tps en cas de chute de la tension T du courant fourni par la réserve d'énergie 5 électrique. Au cours de l'étape (a), le moteur 3 fonctionne à une vitesse nominale V0. En cas d'émission par l'unité de gestion 6 d'une consigne initiale 12, la vitesse V1 du moteur 3 est réduite au seuil minimal de vitesse Smin conformément à l'application de la première consigne corrigée C1. Puis en fonction des ordres de commande 8 générés par le module de commande 9, la vitesse V2 du moteur 3 varie dans la plage de vitesse P conformément à l'application de la deuxième consigne corrigée C2.

Dans ce contexte, la vitesse V2 courante du moteur 3 est susceptible de varier en continu en fonction des ordres de commande 8 générés par le module de commande 9. A cet effet, le moyen de commande 11 effectue des calculs itératifs de la deuxième consigne corrigée C2 prenant en compte une éventuelle variation des ordres de commande 8. Pour chacun de ces calculs itératifs, le moyen de commande 11 génère une deuxième consigne corrigée C2 dont la valeur varie pour adapter la vitesse V2 courante du moteur 3 en fonction des besoins identifiés par les ordres de commande 8.

Sur la figure 4 et illustré à l'étape (d) représentée sur la figure 2, le moyen de commande 11 fait varier la vitesse V du moteur 3 par variation de la tension T et/ou du courant électrique alimentant le moteur 3 en énergie électrique. A cet effet, le moyen de commande 11 applique une règle de calcul R prenant en compte la tension T et/ou le courant électrique mesurée aux bornes d'alimentation en énergie électrique du moteur 3, à laquelle est appliqué un coefficient A proportionnel. Le coefficient A est notamment déterminé sur la base d'un paramètre d'identification du rendement Rnd du compresseur 1.

## Revendications

1. Procédé de régulation de la vitesse d'un moteur (3) électrique d'entraînement d'un compresseur (1) constitutif d'un circuit de climatisation (2) d'un véhicule automobile, le moteur (3) étant alimenté en énergie électrique par une réserve d'énergie (5) électrique du véhicule dont l'exploitation est régulée par une unité de gestion (6), la mise en œuvre du moteur (3) étant régulé en fonction d'ordres de commande (8) générés par un module de commande (9) selon les besoins du véhicule, le procédé comprenant les opérations suivantes :
-) surveillance par l'unité de gestion (6) de la tension (T) et/ou du courant fourni par la réserve d'énergie (5) électrique au regard d'un seuil nominal (SN) de tension, et en cas de détection par l'unité de gestion (6) d'une baisse de tension et/ou de courant,
-) génération par l'unité de gestion (6) d'une consigne initiale (12) relative à une consommation autorisée d'énergie électrique par le moteur (3) et déduction d'une vitesse maximale autorisée du moteur (3) à partir de la consigne initiale, la vitesse d'entrainement du compresseur par le moteur est alors réduite pour limiter sa consommation en énergie électrique, **caractérisé en ce que** le procédé comprenant les opérations suivantes :
-) surveillance par un moyen de commande (11) d'un état de surcharge (E) du compresseur (1), et en cas de surcharge du compresseur (1) génération par le moyen de commande (11) d'au moins une consigne corrigée (C1,C2) relative à une vitesse (V) du moteur (3) interdisant un état de surcharge (E) du compresseur (1),
-) conformément à une consigne initiale (12) donnée et à une interdiction d'un état de surcharge (E) du compresseur (1), la consigne corrigée (C2) varie selon les ordres de commande (8) dans une plage de vitesses (P).

2. Procédé selon la revendication 1, dans lequel la plage de vitesses (P) est comprise entre un seuil maximal de vitesse (Smax) au plus égal à une vitesse conforme à la consigne initiale (12) et un seuil minimal de vitesse (Smin) conforme à un maintien du compresseur (1) hors état de surcharge (E).

3. Procédé selon la revendication 2, dans lequel le seuil maximal de vitesse (Smax) est déduit de la consigne initiale (12) par le moyen de commande (11).

4. Procédé selon l'une quelconque des revendications 2 et 3, dans lequel la mise en oeuvre du moteur (3) étant en outre placée sous dépendance d'un module de contrôle (7) interdisant un effort du moteur (3) supérieur à un seuil de sécurité (SE), le seuil maximal de vitesse (Smax) est limité par le moyen de commande (11) de manière strictement inférieure au seuil de sécurité (SE).

5. Procédé selon l'une quelconque des revendications 2 à 4, dans lequel la consigne corrigée (C1,C2) est appliquée par le moyen de commande (11) par variation de la tension (T) du courant électrique alimentant le moteur (3), conformément à une règle de calcul (R) tenant compte de la tension (T) du courant électrique fourni par la réserve d'énergie (5) électrique à laquelle est appliqué un coefficient (A).

6. Procédé selon la revendication 5, dans lequel le coefficient (A) est un coefficient proportionnel déduit par le moyen de commande (11) à partir d'au moins un paramètre d'identification du rendement (Rnd) du compresseur (1).

7. Procédé selon l'une quelconque des revendications 1 à 6, dans lequel la consigne corrigée (C2) est itérativement calculée par le moyen de commande (11) à fréquence donnée.

8. Procédé selon l'une quelconque des revendications 1 à 6, dans lequel la consigne corrigée (C2) est calculée par le moyen de commande (11) consécutivement à une détection d'une variation des ordres de commande (8).

9. Procédé selon l'une quelconque des revendications 1 à 8, dans lequel le procédé comprend les opérations suivantes :
-) transmission au moyen de commande (11) de la consigne initiale (12) générée par l'unité de gestion (8) et identification par le moyen de commande (11) de la plage de vitesses (P),
-) transmission au moyen de commande (11) des ordres de commande (8) générés par le module de commande (9),
-) génération par le moyen de commande (11) d'une première consigne corrigée (C1) correspondante à la plus faible valeur de la plage de vitesses (P), puis
-) génération itérative par le moyen de commande (11) d'une deuxième consigne corrigée (C2) variant selon les ordres de commande (8) dans la plage de vitesses (P) préalablement identifiée par le moyen de commande (11).

10. Procédé selon la revendication 9, où lors d'une variation de la consigne initiale (12), le moyen de commande (11) identifie une nouvelle plage de vitesses (P) conforme à la variation de la consigne initiale (12) et génère alors une nouvelle première consigne corrigée (C1).

## Patentansprüche

1. Verfahren zur Regelung der Drehzahl eines Elektromotors (3) zum Antrieb eines Kompressors (1), der Bestandteil eines Klimakreislaufs (2) eines Kraftfahrzeugs ist, wobei der Motor (3) durch eine elektrische Energiereserve (5) des Fahrzeugs mit elektrischer Energie versorgt wird, deren Nutzung durch eine Verwaltungseinheit (6) geregelt wird, wobei der Einsatz des Motors (3) abhängig von Steuerbefehlen (8) geregelt wird, die von einem Steuermodul (9) nach dem Bedarf des Fahrzeugs erzeugt werden, wobei das Verfahren die folgenden Operationen umfasst:
-) Überwachen der Spannung (T) und/oder des Stroms, der von der elektrischen Energiereserve (5) bereitgestellt wird, durch die Verwaltungseinheit (6) bezüglich eines nominalen Schwellenwerts (SN) der Spannung, und im Fall der Erkennung eines Spannungs- und/oder Stromabfalls durch die Verwaltungseinheit (6)
-) Erzeugen eines Anfangssollwerts (12) für einen erlaubten Verbrauch an elektrischer Energie durch den Motor (3) und Ableiten einer erlaubten maximalen Drehzahl des Motors (3) auf Grundlage des Anfangssollwerts durch die Verwaltungseinheit (6), wobei die Drehzahl zum Antrieb des Kompressors durch den Motor dann reduziert wird, um seinen Verbrauch an elektrischer Energie zu begrenzen, **dadurch gekennzeichnet, dass** das Verfahren die folgenden Operationen umfasst:
-) Überwachen eines Überlastzustands (E) des Kompressors (1) durch ein Steuermittel (11) und im Falle der Überlast des Kompressors (1) Erzeugen mindestens eines korrigierten Sollwerts (C1, C2) für eine Drehzahl (V) des Motors (3), der einen Überlastzustand (E) des Kompressors (1) verbietet, durch das Steuermittel (11), entsprechend einem gegebenen Anfangssollwert (12) und einem Verbot eines Überlastzustands (E) des Kompressors (1) variiert der korrigierte Sollwert (C2) gemäß den Steuerbefehlen (8) in einem Drehzahlbereich (P).

2. Verfahren nach Anspruch 1, wobei der Drehzahlbereich (P) zwischen einem maximalen Drehzahl-Schwellenwert (Smax), der höchstens gleich einer Drehzahl entsprechend dem Anfangssollwert (12) ist, und einem minimalen Drehzahl-Schwellenwert (Smin), der einer Haltung des Kompressors (1) außerhalb des Überlastzustands (E) entspricht, liegt.

3. Verfahren nach Anspruch 2, wobei der maximale Drehzahl-Schwellenwert (Smax) durch das Steuermittel (11) vom Anfangssollwert (12) abgeleitet wird.

4. Verfahren nach einem der Ansprüche 2 und 3, wobei der Einsatz des Motors (3) außerdem in die Abhängigkeit eines Kontrollmoduls (7) gestellt ist, das eine Motorlast (3) über einem Sicherheitsschwellenwert (SE) verbietet, und der maximale Drehzahl-Schwellenwert (Smax) durch das Steuermittel (11) so begrenzt wird, dass er streng unter dem Sicherheitsschwellenwert (SE) liegt.

5. Verfahren nach einem der Ansprüche 2 bis 4, wobei der korrigierte Sollwert (C1, C2) durch das Steuermittel (11) über eine Variation der Spannung (T) des elektrischen Stroms, der den Motor (3) versorgt, entsprechend einer Rechenregel (R) angewandt wird, die die Spannung (T) des von der elektrischen Energiereserve (5) gelieferten elektrischen Stroms berücksichtigt, auf die ein Koeffizient (A) angewandt wird.

6. Verfahren nach Anspruch 5, wobei der Koeffizient (A) ein proportionaler Koeffizient ist, der durch das Steuermittel (11) auf Grundlage mindestens eines Identifikationsparameters des Wirkungsgrads (Rnd) des Kompressors (1) abgeleitet wird.

7. Verfahren nach einem der Ansprüche 1 bis 6, wobei der korrigierte Sollwert (C2) durch das Steuermittel (11) mit einer gegebenen Frequenz iterativ berechnet wird.

8. Verfahren nach einem der Ansprüche 1 bis 6, wobei der korrigierte Sollwert (C2) durch das Steuermittel (11) auf eine Erkennung einer Variation der Steuerbefehle (8) folgend berechnet wird.

9. Verfahren nach einem der Ansprüche 1 bis 8, wobei das Verfahren die folgenden Operationen umfasst:
-) Senden des durch die Verwaltungseinheit (6) erzeugten Sollwerts (12) an das Steuermittel (11) und Ermitteln des Drehzahlbereichs (P) durch das Steuermittel (11),
-) Senden der durch das Steuermodul (9) erzeugten Steuerbefehle (8) an das Steuermittel (11),
-) Erzeugen eines ersten korrigierten Sollwerts (C1), der dem geringsten Wert des Drehzahlbereichs (P) entspricht, durch das Steuermittel (11), dann
-) iteratives Erzeugen eines zweiten korrigierten Sollwertes (C2), der gemäß den Steuerbefehlen (8) in dem vom Steuermittel (11) zuvor ermittelten Drehzahlbereich (P) variiert, durch das Steuermittel (11).

10. Verfahren nach Anspruch 9, bei dem bei einer Variation des Anfangssollwerts (12) das Steuermittel (11) einen neuen Drehzahlbereich (P), der der Variation des Anfangssollwerts (12) entspricht, ermittelt und dann einen neuen ersten korrigierten Sollwert (C1) erzeugt.

## Claims

1. Method for regulating the speed of an electric motor (3) for driving a constituent compressor (1) of an air-conditioning circuit (2) of a motor vehicle, the motor (3) being supplied with electrical energy by an electrical energy reserve (5) of the vehicle of which the use is regulated by a management unit (6), the implementation of the motor (3) being regulated as a function of control commands (8) generated by a control module (9) according to the needs of the vehicle, the method comprising the following operations:
-) monitoring by the management unit (6) of the voltage (T) and/or of the current provided by the electrical energy reserve (5) with regard to a nominal voltage threshold (SN), and in the event of detection by the management unit (6) of a drop in voltage and/or current,
-) generation by the management unit (6) of an initial setpoint (12) relating to an authorized consumption of electrical energy by the motor (3) and deduction of a maximum authorized speed of the motor (3) from the initial setpoint, the speed at which the compressor is driven by the motor is then reduced so as to limit its consumption of electrical energy, **characterized in that** the method comprises the following operations:
-) monitoring by a control means (11) of a state of overloading (E) of the compressor (1), and in the event of overloading of the compressor (1) generation by the control means (11) of at least one corrected setpoint (C1, C2) relating to a speed (V) of the motor (3) preventing a state of overloading (E) of the compressor (1),
-) in accordance with a given initial setpoint (12) and with prevention of a state of overloading (E) of the compressor (1), the corrected setpoint (C2) varies according to the control commands (8) in a range of speeds (P) .

2. Method according to Claim 1, wherein the range of speeds (P) is between a maximum speed threshold (Smax) at most equal to a speed in accordance with the initial setpoint (12) and a minimum speed threshold (Smin) in accordance with keeping the compressor (1) out of a state of overloading (E).

3. Method according to Claim 2, wherein the maximum speed threshold (SMax) is deduced from the initial setpoint (12) by the control means (11).

4. Method according to either one of Claims 2 and 3, wherein since the implementation of the motor (3) is also placed under the dependency of a controlling module (7) preventing a force of the motor (3) above a safety threshold (SE), the maximum speed threshold (Smax) is limited by the control means (11) in a manner strictly below the safety threshold (SE).

5. Method according to any one of Claims 2 to 4, wherein the corrected setpoint (C1, C2) is applied by the control means (11) by variation of the voltage (T) of the electric current supplying the motor (3), in accordance with a calculation rule (R) taking account of the voltage (T) of the electric current provided by the electrical energy reserve (5) to which a coefficient (A) is applied.

6. Method according to Claim 5, wherein the coefficient (A) is a proportional coefficient deduced by the control means (11) from at least one parameter for identifying the efficiency (Rnd) of the compressor (1).

7. Method according to any one of Claims 1 to 6, wherein the corrected setpoint (C2) is iteratively calculated by the control means (11) at a given frequency.

8. Method according to any one of Claims 1 to 6, wherein the corrected setpoint (C2) is calculated by the control means (11) consecutively to a detection of a variation of the control commands (8).

9. Method according to any one of Claims 1 to 8, wherein the method comprises the following operations:
-) transmission to the control means (11) of the initial setpoint (12) generated by the management unit (8) and identification by the control means (11) of the range of speeds (P),
-) transmission to the control means (11) of the control commands (8) generated by the control module (9),
-) generation by the control means (11) of a first corrected setpoint (C1) corresponding to the lowest value of the range of speeds (P), then
-) iterative generation by the control means (11) of a second corrected setpoint (C2) varying according to the control commands (8) in the range of speeds (P) previously identified by the control means (11).

10. Method according to Claim 9, wherein during a variation of the initial setpoint (12), the control means (11) identifies a new range of speeds (P) in accordance with the variation of the initial setpoint (12) and then generates a new first corrected setpoint (C1).
